Europäisches Patentamt

European Patent Office

Office européen des brevets

(19)

(11) Publication number: **0 138 392**
A1

(12) # EUROPEAN PATENT APPLICATION

(21) Application number: **84306304.1**

(22) Date of filing: **14.09.84**

(51) Int. Cl.⁴: **B 23 B 27/18**

(30) Priority: 16.09.83 ZA 836900

(43) Date of publication of application: **24.04.85**
Bulletin 85/17

(84) Designated Contracting States: **AT BE CH DE FR GB LI**

(71) Applicant: **DE BEERS INDUSTRIAL DIAMOND DIVISION (PROPRIETARY) LIMITED, 8th Floor 45 Main Street, Johannesburg Transvaal (ZA)**

(72) Inventor: **Dyer, Henry Brooke, 28 George Street, Bryanston Sandton (ZA)**

(74) Representative: **Jones, Alan John et al, CARPMAELS & RANSFORD 43 Bloomsbury Square, London, WC1A 2RA (GB)**

(54) **Cutting tool.**

(57) A cutting tool comprising shank 28 and a cutting component 34 located in a recess in one end of the shank. The cutting component consists of an abrasive compact bonded to a cemented carbide support. Both the 5 rear surface 36 and the base surface 38 of the carbide support provide surfaces for brazing the component to the shank. The point 40 provides the cutting edge for the tool.

0138392

## Cutting Tool

BACKGROUND OF THE INVENTION

This invention relates to cutting tools.

Cutting tools such as turning tools, milling cutters, circular saws and tandem-mounted grooving cutters utilising composite abrasive compacts as the cutting components thereof are widely used in industry. Such cutting tools comprise a supporting body to which are secured the abrasive compacts. The composite abrasive compacts which are used in such cutting tools comprise an abrasive compact bonded to a support backing of cemented carbide. The composite abrasive compact may take a variety of shapes such as circular, segmental, square or rectangular.

In the prior art, the composite abrasive compacts for cutting tools have provided support backing for a major surface of the abrasive compact only. Side support for the compact is not provided.

- 2 -                                    0138392

## SUMMARY OF THE INVENTION

According to the present invention, there is provided a cutting tool comprising a support body to which is secured a cutting component, the cutting component comprising an abrasive compact located in a recess formed in a surface of a cemented carbide support of greater mass and bonded to the support, the compact presenting major surfaces on each of opposite sides thereof, the one major surface being bonded to the support and the other major surface providing a cutting edge for the tool, the carbide support providing substantial backing behind the major surface of the compact to which it is bonded and side support for the compact and being secured to the support body by means of a braze.

## DESCRIPTION OF THE DRAWINGS

Figures 1 and 2 are perspective views of two embodiments of cutting components for use in the invention;  and

Figure 3 is a perspective view of a turning tool of the invention.

## DETAILED DESCRIPTION OF THE INVENTION

In the cutting tool of the invention, the composite abrasive compact is provided with support backing behind the one major surface to which it is bonded as well as side support.  Thus, the cutting component presents a large surface area of cemented carbide for brazing to the support body.  This larger braze area gives a greater area for the dissipation of heat generated during cutting.  As a result, there is less chance of tools de-brazing during use.  Furthermore, this enables cutting components of large size to be used. Moreover, greater cemented carbide support for the compact is provided than in prior art cutting components increasing the effective working life of the component.

The cutting tool of the invention may be a turning or boring tool, a milling cutter, a circular saw or a tandem-mounted grooving cutter.

The cutting component is secured to the suppport body of the cutting tool by means of a suitable braze. Suitable brazes will generally have melting points below 700°C and are well known in the art. Examples of suitable brazes are Ag/Cu/Zn brazes which may optionally contain minor amounts of cadmium and nickel.

The abrasive compact for the cutting component may be any known in the art, but is preferably a diamond abrasive compact.

The cemented carbide support may be any known in the art and will typically be cemented tungsten carbide.

The support body of the cutting tool will generally be made of a suitable metal such as steel.

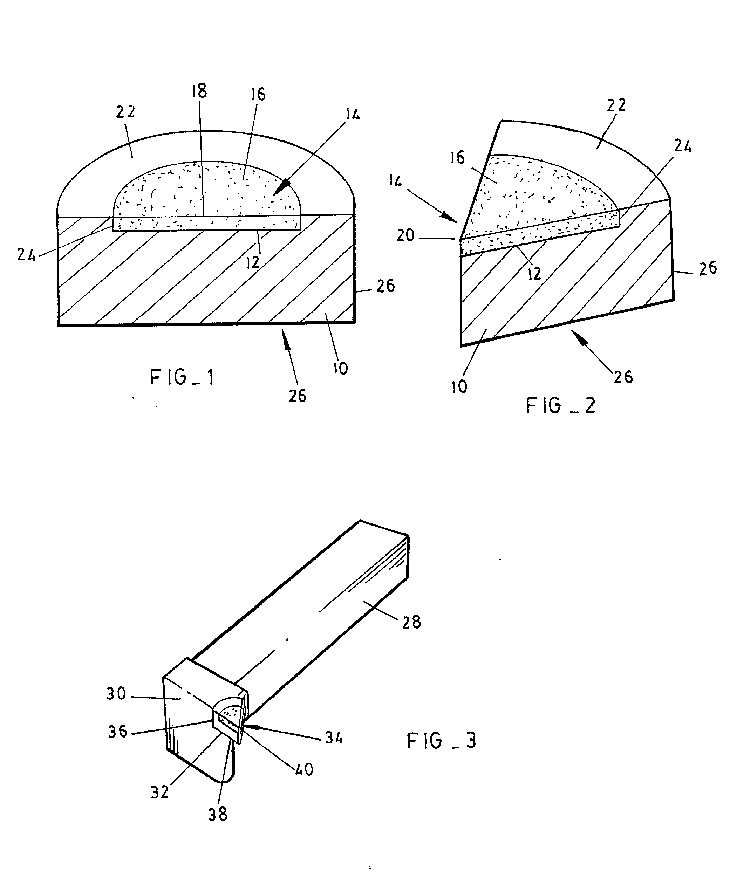

Figures 1 and 2 illustrate two embodiments of cutting components useful in the cutting tools of the invention. The cutting components comprise a cemented carbide support body 10 having a recess 12 formed in one end thereof. Located in the recess 12 is an abrasive compact 14 which presents major surfaces on each of opposite sides thereof. The one major surface (not shown) is bonded to the cemented carbide support. The other major surface 16 provides a cutting edge for the component. In the case of the embodiment of Figure 1 a straight cutting edge 18 is provided, while in the embodiment of Figure 2 the cutting edge is a point 20.

In both embodiments, the abrasive compact is provided with side support 22 along the entire curved side surface 24 of the compact.

In both embodiments, the cutting components are segments of a disc. The carbide outer surface 26 provides a larger brazing surface for securing the component to a support body of a cutting tool. This means that larger cutting components than have been used in the prior art may be used. In particular, it has been found that segmental components having diameters greater than 15 mm may be used.

The cutting components illustrated by Figures 1 and 2 may be produced by first producing a disc-shaped body comprising a cylindrical cemented carbide support having a recess formed in one end surface thereof and in which the compact 14 is located and bonded. An example of such a method is described in European Patent Publication No. 003915. The body so produced may then be fragmented into the shapes illustrated by Figures 1 and 2 or any other suitable shape using severing techniques known in the art such as laser cutting or spark erosion.

The cutting component, as illustrated in either Figure 1 or Figure 2, may be mounted in a tool holder for turning workpieces as illustrated in Figure 3. The tool holder is of conventional configuration and has a shank 28 for mounting between appropriate clamping plates or arms. The end 30 of the shank has a recess 32 which accommodates a cutting component 34. The cutting component is bonded to the shank by brazing both the rear surface 36 and base surface 38 of the carbide support body to the shank. This large brazing area enables large components to be used and reduces the risk of tool de-brazing during use. The point 40 of the cutting component provides the cutting edge for the tool.

CLAIMS:

1.

A cutting tool comprising a support body to which is secured a cutting component, the cutting component comprising an abrasive compact located in a recess formed in a surface of a cemented carbide support of greater mass and bonded to the support, the compact presenting major surfaces on each of opposite sides thereof, the one major surface being bonded to the support and the other major surface providing a cutting edge for the tool, the carbide support providing substantial backing behind the major surface of the compact to which it is bonded and side support for the compact and being secured to the support body by means of a braze.

2.

A cutting tool according to claim 1 wherein the cutting component is in the form of a segment of a disc.

3.

A cutting tool according to claim 2 wherein the segment has a diameter of at least 15 mm.

4.

A cutting tool according to any one of the preceding claims wherein the abrasive compact is a diamond abrasive compact.

FIG _ 1

FIG _ 2

FIG _ 3

0138392

**European Patent Office**

**EUROPEAN SEARCH REPORT**

. Application number

EP 84306304.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB - A - 2 037 629 (DIAMOND) <br> * Fig. 25-32 * | 1-4 | B 23 B 27/18 |
| A | CH - A - 435 922 (PLANSEE) <br> * Fig. 3 * | 1 | |
| A | DE - B - 1 294 781 (SUPER-CUT) <br> * Totality * | 1 | |
| A | DE - B - 1 477 118 (DIADUR) <br> * Totality * | 1 | |
| D,A | EP - A1 - 0 003 915 (WILSON) <br> * Totality * | 1 | |

**TECHNICAL FIELDS SEARCHED (Int. Cl.4)**

B 23 B 27/00

B 24 D 3/00

C 09 K 3/00

The present search report has been drawn up for all claims

| Place of search | Date of completion of the search | Examiner |
|---|---|---|
| VIENNA | 21-12-1984 | FUCHS |